# EUROPÄISCHE PATENTSCHRIFT

(11) **EP 2 780 215 B1**
(45) Veröffentlichungstag und Bekanntmachung des Hinweises auf die Patenterteilung: **22.03.2017**
(21) Anmeldenummer: 12788197.7
(22) Anmeldetag: 16.11.2012
(51) Int. Cl.: B62D 21/20, B62D 53/08

(54) **CHASSIS**
CHASSIS
CHÂSSIS

(30) Priorität: 18.11.2011 DE 202011052016 U; 17.09.2012 DE 102012108692
(43) Veröffentlichungstag der Anmeldung: 24.09.2014
(73) Patentinhaber: Kögel Trailer GmbH & Co. KG, 89649 Burtenbach (DE)
(72) Erfinder: ESCHEY, Thomas, 86500 Kutzenhausen (DE)
(74) Vertreter: Meissner Bolte Partnerschaft mbB
(86) Internationale Anmeldenummer: PCT/EP2012/072924
(87) Internationale Veröffentlichungsnummer: WO 2013/072506

(56) Entgegenhaltungen:
- EP-A1- 0 312 626
- EP-A1- 0 439 409
- EP-A1- 1 541 454
- EP-A1- 2 483 134
- DE-B3- 10 321 541
- DE-U1- 9 110 120
- DE-U1- 9 110 124

## Beschreibung

Die Erfindung betrifft ein Chassis für Anhänger, insbesondere für Sattelauflieger, mit den Merkmalen im Oberbegriff des Hauptanspruchs.

Ein solches Chassis für Sattelauflieger ist aus der EP 1 541 454 A1 bekannt. Es weist ein Paar über die gesamte Fahrzeuglänge durchgehender paralleler Längsträger auf, die im Querschnitt als I-Stahlprofile ausgebildet sind. Im vorderen verjüngten Bereich weist das Chassis an der Unterseite eine Sattelauflageplatte mit einem Königszapfen auf. Die Sattelauflageplatte liegt auf dem Untergurt der Längsträger in voller Breite auf oder ersetzt den Untergurt bereichsweise.

Die EP 0 528 143 A1 und DE 91 10 124 U zeigen ähnliche Chassiskonstruktionen für Sattelauflieger mit einer im Frontbereich an den Untergurten von I-Längsträgern befestigten Sattelauflageplatte mit einem Königszapfen.

Es ist Aufgabe der vorliegenden Erfindung, ein verbessertes Chassis aufzuzeigen.

Die Erfindung löst diese Aufgabe mit den Merkmalen im Hauptanspruch.
Das beanspruchte Chassis hat den Vorteil einer hohen mechanischen Stabilität und einer verbesserten Anordnung und Ausbildung einer Zugeinrichtung und der zugehörigen Platte. Hierfür ist ein eigenes Kopfteil in Kastenbauweise vorgesehen, welches an die Frontseite eines entsprechenden Rumpfteils des Chassis angesetzt und dort befestigt ist.
Die Formgebung des Kopfteils kann für die jeweiligen Aufgaben und Einsatzzwecke des Anhängers optimiert werden. Die bisherigen Einschränkungen im Stand der Technik mit den über die Länge bis zur Fahrzeugfront durchgehenden I-Längsträgern sind nicht mehr gegeben. Auch eine verjüngte Formgebung des vorderen Chassisbereichs lässt sich besser ausführen.

Eine wannenförmige und nach oben offene Ausbildung des Kopfteils hat ferner den Vorteil, dass sich im Innenraum eine oder mehrere Aufnahmen für Aufbaukomponenten, z.B. für eine Hubeinrichtung eines Kippaufbaus, unterbringen lassen. Die besonders hohe mechanische Stabilität des Kopfteils kommt dem entgegen. Insbesondere kann die mechanische Stabilität durch ein oder mehrere geeignete Einbauwände in Längs- und/oder Querrichtung optimiert und an die baulichen und kräftemäßigen Erfordernisse adaptiert werden.

Das mehrteilige Chassis kann modular aufgebaut sein, wobei zwei oder mehr Module, insbesondere ein Rumpfteil und ein Kopfteil, vorhanden sind. Die Verbindung zwischen Rumpf- und Kopfteil kann in belastungsgünstiger Weise erfolgen, z.B. durch eine Schweißverbindung. Bei einer Ausbildung des Kopfteils mit einer abgekanteten Rückwand kann eine zusätzliche Festigkeit und Verbindungssteifigkeit durch eine Überlappschweißung zwischen dem Verbindungsflansch und der Rumpfteiloberseite, z.B. mit den Obergurten der dortigen Längsträger, erzielt werden. Besonders günstig kann hier eine Lochschweißung sein. Die anderen Schweißstellen können Stumpfnähte sein. Andere Ausbildungen und Anordnungen von Verbindungsflanschen sind ebenfalls möglich. In allen Varianten übergreifen sie die Stoss- und Verbindungsstelle von Kopfteil und Längsträgern und erhöhen die Verbindungsstabilität und die Festigkeit.

In konstruktiver Hinsicht ist die Ausbildung des Kopfteils mit einem Wannenblech und an dessen Seitenöffnungen eingesetzten und befestigten Seitenwandprofilen besonders günstig. Eine solche Konstruktion kann auch den Vorteil einer besseren Festigkeit und Verformungssteifigkeit als bei den vorbekannten Konstruktionen mit einer zwischen I-Trägern eingebauten Sattelauflageplatte haben. Die erfindungsgemäße Kastenkonstruktion kann filigraner und gewichtsgünstiger als die vorbekannten Konstruktionen des vorderen Chassisbereichs ausfallen. Auch die Kräfteeinleitung von der Zugverbindung auf das Rumpfteil und dessen Längsträger kann gegenüber dem Stand der Technik verbessert werden. Die beanspruchte Chassisgestaltung hat außerdem den Vorteil, dass sie sich nicht nur für Sattelauflieger, sondern auch für andere Anhänger eignet. Dies können z.B. Anhänger mit einem Drehschemel und einer Schwenkdeichsel sein.

In den Unteransprüchen sind weitere vorteilhafte Ausgestaltungen der Erfindung angegeben.

Insbesondere kann die Kastenkonstruktion im Innenraum eine oder mehrere längs und/oder quer Einbauwände aufweisen. Das Rumpfteil kann einen oder mehrere Querträger aufweisen.

Die Erfindung ist in den Zeichnungen beispielhaft und schematisch dargestellt. Im Einzelnen zeigen:
- Figur 1:: eine perspektivische schematische Ansicht eines Chassis für einen Sattelauflieger mit einem Rumpfteil und einem Kopfteil,
- Figur 2:: eine abgebrochene und vergrößerte perspektivische Ansicht des vorderen Chassisbereichs,
- Figur 3:: eine abgebrochene vergrößerte Draufsicht auf das Chassis von Figur 1, und 2,
- Figur 4:: eine Seitenansicht des Chassis von Figur 3 gemäß Pfeil IV,
- Figur 5:: eine abgebrochene und vergrößerte Darstellung des Kopfteils von Figur 4 im Längsschnitt,
- Figur 6:: eine Ansicht des Kopfteils gemäß Pfeil VI von Figur 3 bei weggelassener Rückwand,
- Figur 7 bis 9:: eine Variante des Chassis von Figur 1 bis 6 in verschiedenen Ansichten und
- Figur 10 bis 13:: eine weitere Variante des Chassis von Figur 1 bis 6 in verschiedenen Ansichten.

Die Erfindung betrifft ein Chassis (2) für Anhänger (1), insbesondere für Sattelauflieger. Die Erfindung betrifft ferner einen Anhänger (1), insbesondere einen Sattelauflieger, mit einem solchen Chassis (2).

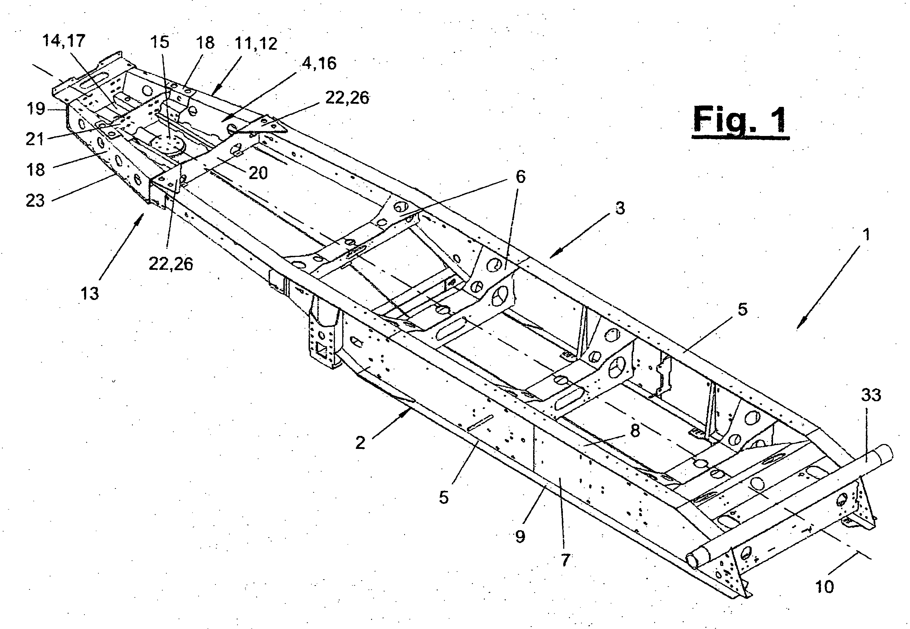

Figur 1 zeigt in perspektivischer Ansicht ein Chassis (2) für einen Sattelauflieger (1). Das Chassis (2) trägt am hinteren Bereich ein nicht dargestelltes Fahrwerk mit einer, zwei, drei oder mehr Achsen nebst Rädern, Bremsanlage, Hubstützen und weiteren zugehörigen Komponenten. Auf dem Chassis (2) ist ein Aufbau angeordnet, der der Übersicht halber nicht dargestellt ist.

Der Aufbau kann von beliebiger Art sein. Beispielsweise handelt es sich um einen Kippaufbau, für den am rückwärtigen Ende des Chassis (2) z.B. eine quer liegende Kippachse (33) angeordnet ist. Ferner weist ein solcher Kippaufbau eine Kippeinrichtung (nicht dargestellt) mit einem Kipp- oder Hubantrieb auf, der z.B. am vorderen Chassisende gelagert und abgestützt ist. Ein solcher Kippaufbau kann z.B. eine Kippmulde, eine Kipppritsche, ein Kippsilo oder ein anderer Behälter sein. In weiterer Abwandlung kann der Aufbau ein Wechselaufbau sein. Der Aufbau kann in einer anderen Ausführungsform aus Aufnahmen für abnehmbare Behälter, z.B. für Container, bestehen. Das Fahrzeug (1) ist dementsprechend als Kippfahrzeug, Containerfahrzeug oder dgl. ausgebildet. In der gezeigten Ausführungsform ist das Chassis für einen Sattelauflieger mit Kippmulde besonders geeignet.

Das aus Metall, bevorzugt aus Stahl, bestehende Chassis (2) kann mehrteilig und insbesondere modular ausgebildet sein. Es besteht z.B. aus einem hinteren Rumpfteil (3) und einem vorderen Kopfteil (4), die in Fahrzeuglängsrichtung (10) hintereinander angeordnet sind und die an einer Stossstelle oder Verbindungsstelle (13) aneinander anliegen und in geeigneter Weise aneinander befestigt sind, z.B. durch Schweißverbindungen (27), insbesondere eine Stumpfnaht (28) und/oder eine Lochschweißung (29). Alternativ sind andere Verbindungsarten, z.B. Schraubverbindungen oder dgl. möglich.

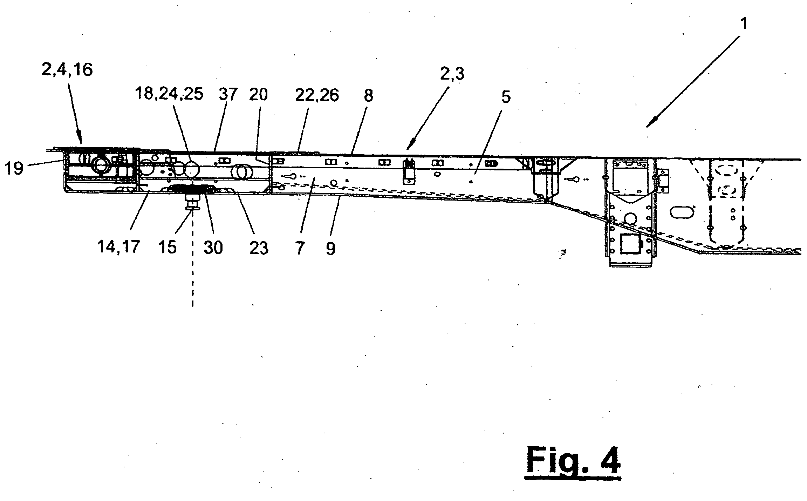

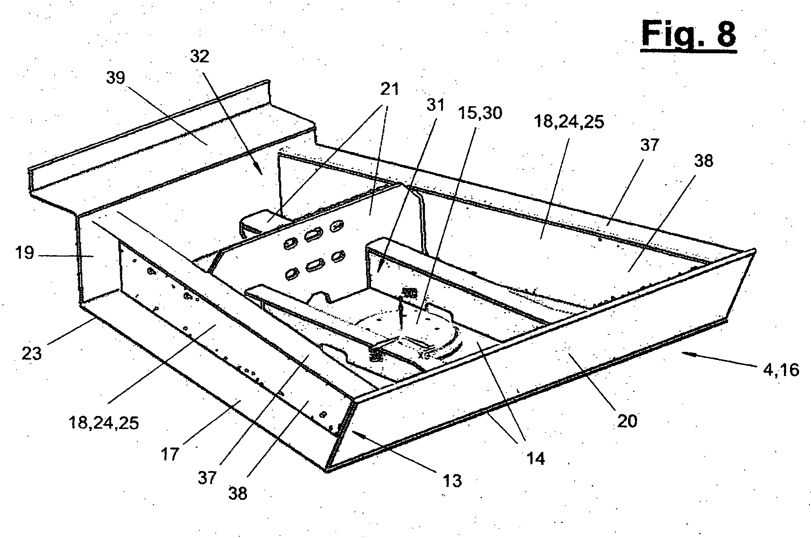

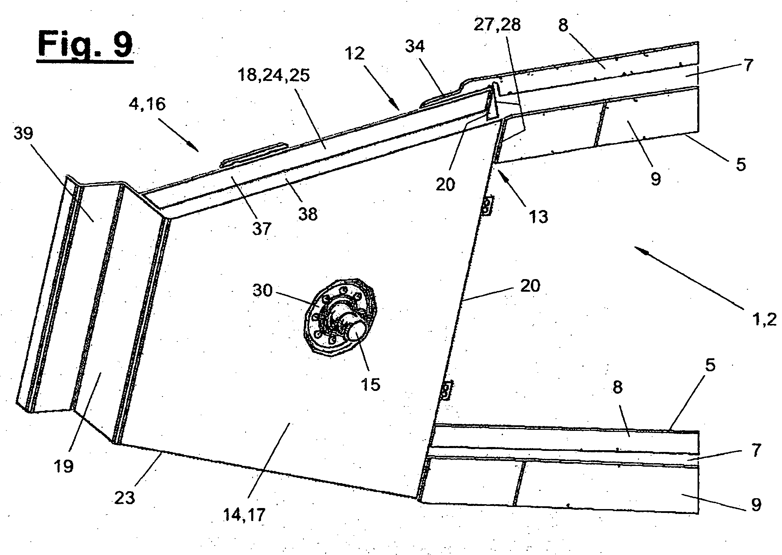

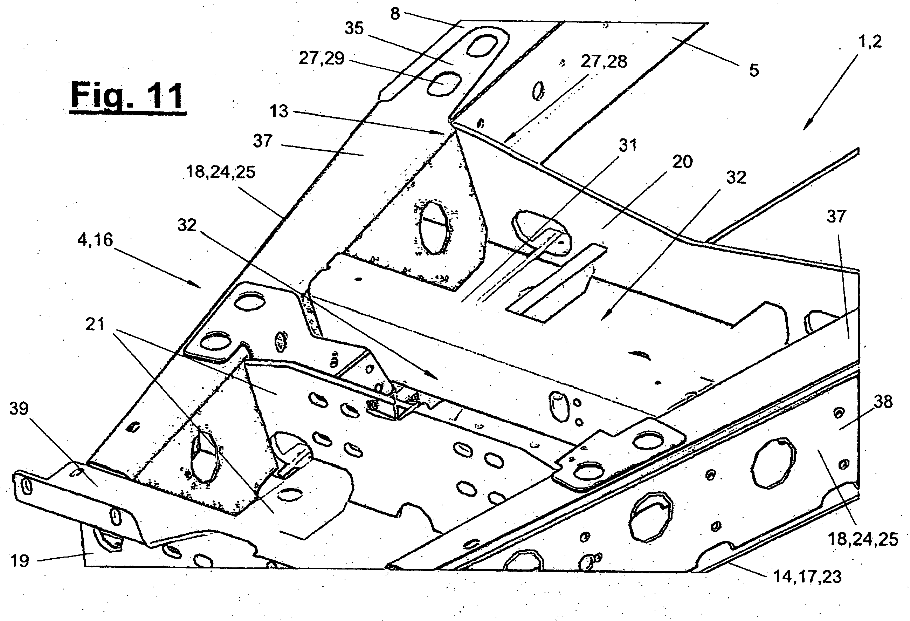

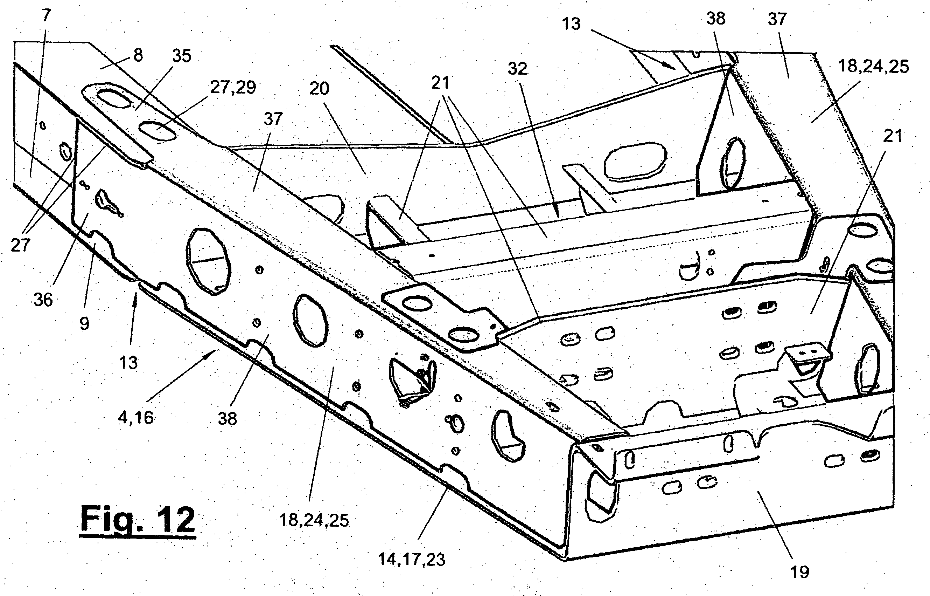

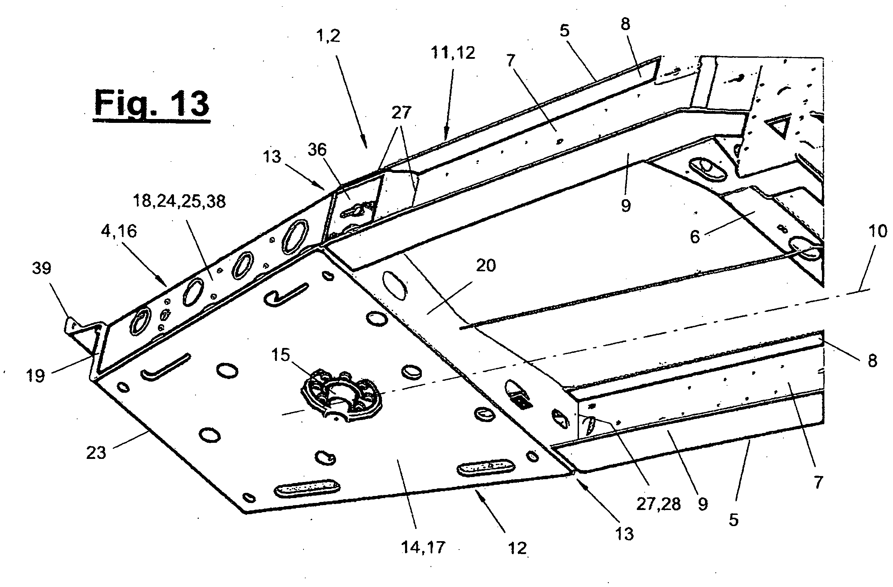

Figur 1 bis 6, Figur 7 bis 9 und Figur 10 bis 13 zeigen verschiedene Varianten für die Ausbildung des Kopfteils (4), wobei die Ausführungsformen teilweise übereinstimmen und dabei gleiche Bezugsziffern haben.

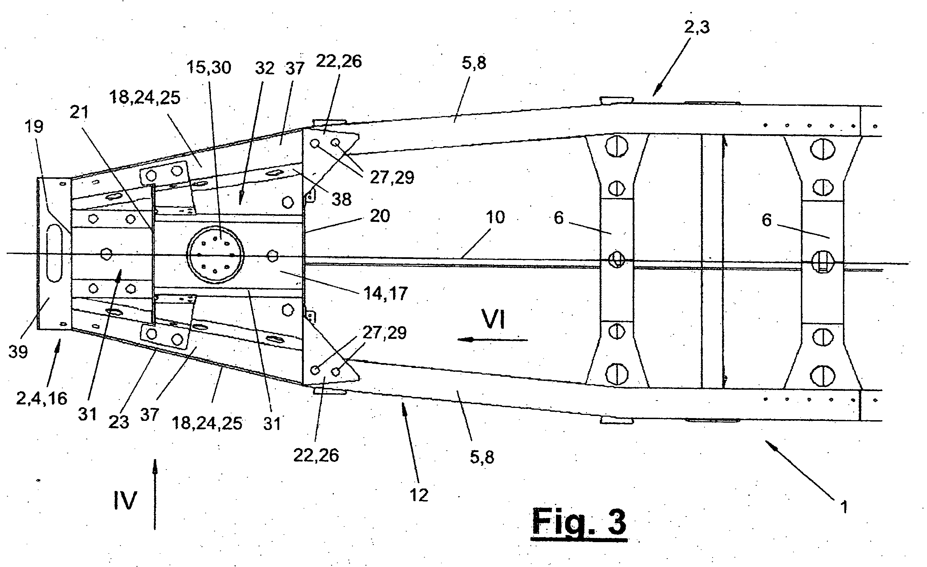

Wie Figur 1 in perspektivischer Ansicht und Figur 3 in der Draufsicht verdeutlichen, kann das Chassis (2) am vorderen Ende (11) eine abnehmende Breite und eine beidseitige konische Verjüngung aufweisen. Das Kopfteil (4) kann hierfür in der Draufsicht gemäß Figur 3 eine Trapezform haben.

Das hintere Chassisteil oder Rumpfteil (3) weist einen oder mehrere Längsträger (5) auf. In der gezeigten Ausführungsform sind zwei parallele Längsträger (5) vorhanden, zwischen denen ein oder mehrere Querträger (6) zur Aussteifung vorhanden sein können. Die Querträger (6) können profiliert und z.B. kastenartig mit einem Quergurt an der Oberseite ausgebildet sein. Zumindest einige Querträger (6) können an der Oberseite eine konkave Formgebung haben. Am rückwärtigen Ende kann ein größerer kastenförmiger Heck-Querträger vorhanden sein.

Die Längsträger (5) können eine beliebig geeignete Querschnittsform haben. Im gezeigten Ausführungsbeispiel sind sie im Querschnitt als I-Träger ausgebildet und bestehen aus einem aufrechten Steg (7), einem oberen Quergurt (8) und einem unteren Quergurt (9). Die Längsträger (5) können einteilig ausgebildet sein oder aus mehreren axial miteinander verbundenen Trägerabschnitten bestehen. In der Formgebung, insbesondere in der Steghöhe, können die Längsträger (5) an die auftretenden Belastungen, insbesondere die einwirkenden Kräfte und Momente, angepasst sein. Im hinteren Rumpf- und Fahrwerksbereich ist die Steghöhe größer als am vorderen Bereich des Rumpfteils (3).

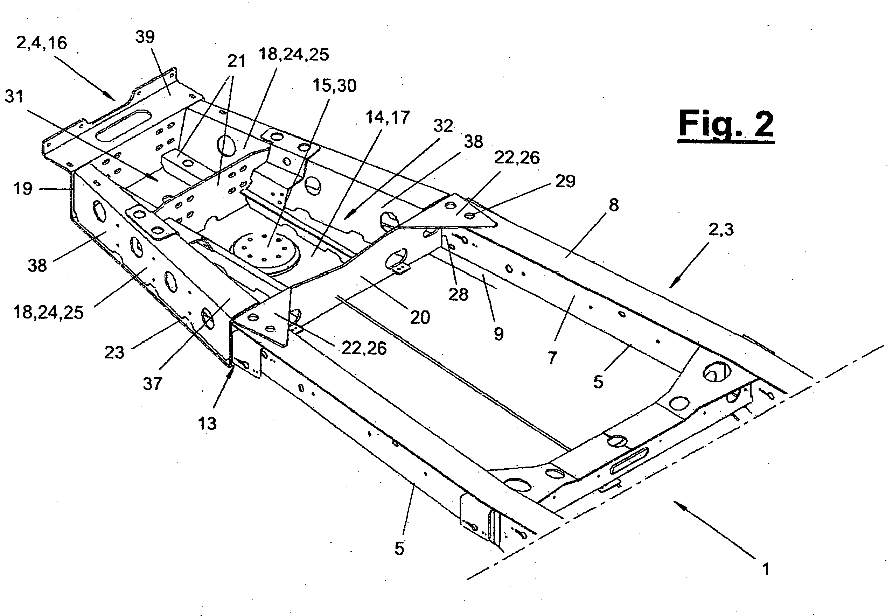

Die Längsträger (5) reichen nicht über die gesamte Fahrzeuglänge. Sie enden an der Vorderfront des Rumpfteils (3) und sind hier z.B. in einer Ebene quer zur Längsachse (10) abgeschnitten. In der gezeigten Ausführungsform ragen die beiden Längsträger (5) nach vorn und enden an der Stoss- oder Verbindungsstelle (13) gemäß Figur 2. In einer anderen Ausführungsform kann am vorderen Ende des Rumpfteils (3) zwischen oder vor den Längsträgern (5) ein Querträger oder eine Querwand vorhanden sein.

Das vordere Kopfteil (4) weist eine Platte (14) auf, die eine Sattelauflageplatte oder eine sog. Scheuerplatte bildet und die auch einen Königszapfen (15) zur Verbindung mit einem Zugfahrzeug (nicht dargestellt) und dessen Satteleinrichtung trägt. Das Kopfteil (4) ist als Kastenkonstruktion (16) ausgebildet. Es ist an der Frontseite des Rumpfteils (3) angesetzt und befestigt, insbesondere durch die vorerwähnten Schweißverbindungen (28,29).

In den gezeigten Ausführungsformen ist das Kopfteil (4) jeweils an der Frontseite der Längsträger (5) angesetzt und befestigt. Alternativ kann diese Anlage und Befestigung an einer Querwand oder an einem Querträger oder an einem anderen Element des Rumpfteils (3) sein. In den gezeigten Ausführungsformen hat das Kopfteil (4) an der Rückseite eine quer zur Längsachse (10) und parallel zur Rumpfteilfront ausgerichtete Rückwand (20), die im stumpfen Stoß an den Frontenden der Längsträger (5) anliegt und dort befestigt, insbesondere verschweißt, ist. Der Längsträger (5) hat zur Stossbildung z.B. eine gerade Frontkante, wobei die Rückwand (20) eben ist. Alternativ kann eine gegenseitig angepasste Stufenbildung oder sonstige Kontur der Kontakt und Stossstelle bestehen.

Wie Figur 2 bis 6 in einem ersten Ausführungsbeispiel verdeutlichen, kann die aufrecht oder vertikal angeordnete Rückwand (20) abgewinkelt sein, wobei sich die Abwinklung z.B. am oberen Rand der Rückwand (20) befindet und einen axial nach hinten abstehenden, und insbesondere die Stoss- oder Verbindungsstelle (13) übergreifenden, Verbindungsflansch (22) bildet. Der Verbindungsflansch (22) liegt in der gezeigten Ausführungsform auf dem Obergurt (8) des,insbesondere benachbarten, Längsträgers (5) des Rumpfteils (3) auf und ist dort in geeigneter Weise befestigt, insbesondere verschweißt. In der gezeigten Ausführungsform besteht der Verbindungsflansch (22) aus zwei randseitigen und in der Draufsicht dreiecksförmigen Flanschwinkeln (26). Alternativ kann der Verbindungsflansch (22) anders ausgebildet sein, z.B. als eine über die Chassisbreite durchgehende und ggf. rechteckige Platte.

Die Schweißverbindung (27) zwischen dem Verbindungsflansch (22) bzw. den Flanschwinkeln (26) und den Längsträgern (5) kann eine Überlappnaht sein. In der gezeigten Ausführungsform weisen die Flanschwinkel (26) ein oder mehrere Löcher auf, an denen die Schweißverbindung (27) als Lochschweißung (29) zum Obergurt (8) ausgebildet ist. In Abwandlung der gezeigten Ausführungsform kann alternativ oder zusätzlich ein Verbindungsflansch der vorgenannten Art an der Unterseite der Rückwand (20) angeordnet sein.

An der Stoss- oder Verbindungsstelle (13) stößt die ebene Rückwand (20) plan an die Frontseite der Längsträger (5) an und ist hier verschweißt. Die Schweißverbindung (27) kann eine Stumpfnaht (28) sein, z.B. eine Kehlnaht.

Wie Figur 3, 4 und 5 in der Draufsicht und der Seitenansicht verdeutlichen, sind die Breiten- und Höhenabmessungen des Rumpfteils (3) und des Kopfteils (4) an der Verbindungsstelle (13) aneinander angepasst.

Hierbei kann insbesondere in der Höhe ein bündiger Übergang oder die gezeigte kleine Stufenausbildung über den Verbindungsflansch (22,26) bestehen. Auch die Außenseite der Längsträger (5), insbesondere der Quergurte (8,9), kann sich in der Außenkontur des Kopfteils (4) fortsetzen, insbesondere mit der besagten Verjüngung (12). Auf letztere kann alternativ zu Gunsten einer rechteckigen Chassisform verzichtet werden.

Das Kopfteil (4) weist eine wannenartige vertiefte Kastenkonstruktion (16) mit einem Boden (17) und seitlich umlaufenden Kastenwänden (18,19,20) auf. Der Boden (17) kann eine Sattelaufnahmeplatte (14) bilden und kann eine Zugverbindung, insbesondere einen Königszapfen (15), tragen. In den gezeigten Ausführungsformen ist das Kopfteil (4) bzw. die Kastenkonstruktion (16) jeweils nach oben offen. Die Kastenwände (18,19,20) umschließen einen hohlen Innenraum (32). In diesem können sich eine oder mehrere Einbauwände (21) befinden, die längs und/oder quer zur Längsachse (10) ausgerichtet sind.

Wie Figur 2, 3 und 6 verdeutlichen, können z.B. im vorderen Kopfteilbereich eine zwischen dem Königszapfen (15) und der Frontwand (19) befindliche Querwand (21) und beidseits des Königszapfens (15) angeordnete und längslaufende Versteifungswände (21) vorhanden sein.

Im Innenraum (32) können eine oder mehrere Aufnahmen (31) für Aufbaukomponenten vorhanden sein. Dies können z.B. Teile der vorerwähnten Kippeinrichtung, insbesondere eine gelenkige Lagerung für einen Hubantrieb, z.B. einen Hubzylinder eines Kippaufbaus, sein. Die Aufnahmen (31) können an den Kastenwänden (18,19,20) und/oder an einer oder mehreren Einbauwänden (21) angeordnet sein. Sie können z.B. als Lochraster zum Anschrauben der besagten Aufbaukomponenten oder als abgestufter Lagersitz oder dgl. ausgebildet sein.

Die wannenförmige vertiefte Kastenkonstruktion (16) kann in beliebig geeigneter Weise ausgebildet sein. Die umlaufenden Kastenwände (18,19,20) können untereinander verbunden und versteift, z.B. verschweißt, sein. Die in Längsrichtung querliegende Vorderwand (19) kann ebenfalls am oberen und/oder unteren Rand eine Abwinklung (39) aufweisen.

In den gezeigten Ausführungsformen weist das Kopfteil (4) jeweils ein konkav gewölbtes oder gebogenes Wannenblech (23) auf, das entlang der Achse (10) ausgerichtet ist und das den Boden (17) und die Vorder- und Rückwand (19,20) bildet. Am Wannenblech (23) können auch die vorerwähnten Abkantungen (39) oder Verbindungsflansch(e) (22) angeordnet sein. Das Wannenblech (23) kann zu beiden Seiten hin offen sein, wobei in den Öffnungen profilierte Längsträger (24) eingesetzt und befestigt sind, welche die Öffnungen verschließen und die Seitenwände (18) des Kopfteils (4) bilden. Das Wannenblech (23) kann im Absenkungsbereich im Längsschnitt eine U-Form aufweisen mit aufrecht stehenden Wänden (19,20). Letztere können auch eine geneigte Ausrichtung haben, wobei sich die Gestaltung des Rumpfteils (3) an der Verbindungsstelle (13) entsprechend ändert und angepasst ist.

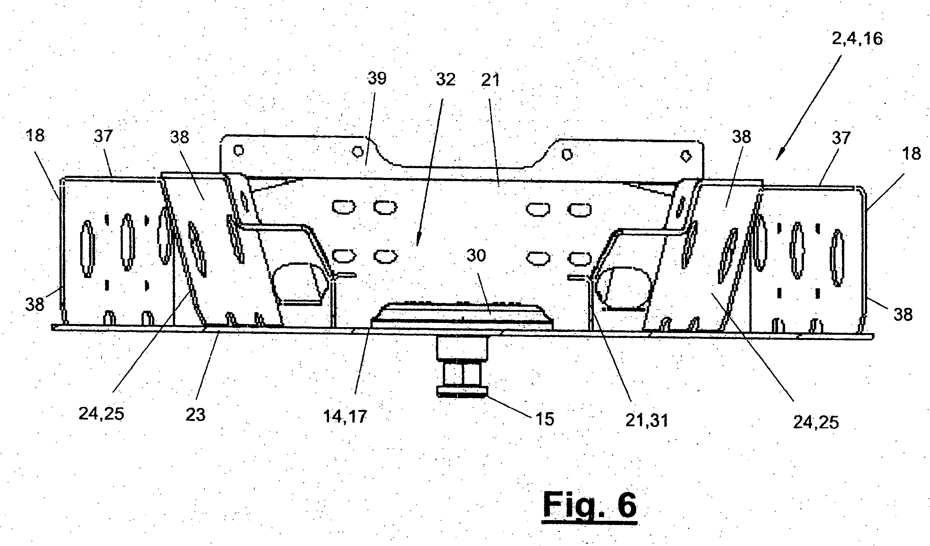

Wie Figur 6 mit Blick von der Stirnwand (20) aus nach vorn verdeutlicht, können die profilierten Längsträger (24) im Querschnitt als U-Profile (25) ausgebildet sein,Diese können einen oberen Quergurt (37) und zwei, die U-Schenkel bildende aufrechte Stege (38) aufweisen. Die U-Profile (25) sind mit ihrer Längsöffnung nach unten zum Boden (17) gerichtet und mit ihren dortigen Längsrändern am Wannenblech (23) befestigt, insbesondere angeschweißt. Die stirnseitigen Profilränder sind mit den stirnseitigen Kastenwänden (19,20) verbunden, insbesondere verschweißt.

Die Seitenwände (18) bzw. die Längsträger (24) sind entsprechend der Verjüngung (12) schräg ausgerichtet. Sie können auch in der Draufsicht eine sich zur Frontseite hin verjüngende Formgebung bzw. Breite haben. Die Profile (24) können in ihren Wänden ein oder mehrere Öffnungen haben, die der Gewichtsersparnis und/oder zu Funktions-, insbesondere zu Montagezwecken dienen können. Die Breite des Querstegs oder des oberen Quergurtes(37) der Längsträger(34), bzw. Profile (25) kann an der Verbindungsstelle (.13) an die Breite des oder der Quergurte (8,9) angepasst sein. In Abwandlung der gezeigten Ausführungsform können die Längsträger (24) eine andere Formgebung und insbesondere eine andere Querschnittsform haben, z.B. als I- oder L-Träger.

Die Ausbildung der Längsträger (24) bzw. Profile (25) als Hohlkörper hat den Vorteil, dass hier Versorgungselemente, insbesondere Leitungen, geschützt am Chassis (2) verlegt und geführt werden können. Die Rückwand (20) kann eine oder mehrere entsprechende Durchlassöffnungen aufweisen. Die Versorgungselemente können dann im Rumpfteil (3) in geeigneter Weise weitergeführt werden, z.B. in oder an den Längsträgern (5). An der Frontwand (19) können ebenfalls ein oder mehrere Austrittöffnungen vorhanden sein, wobei hier auch außenseitig eine Schnittstelle mit Anschlüssen für Betriebsmittel, z.B. Druckluft, Leistungs- und Signalströme etc. angebaut sein kann.

Im Chassis (2) können weitere Versorgungsteile für das Fahrzeug (1) und den Aufbau vorhanden sein, z.B. Druckluftbehälter, Hydraulikbehälter, Pumpen, Beleuchtung oder dergleichen.

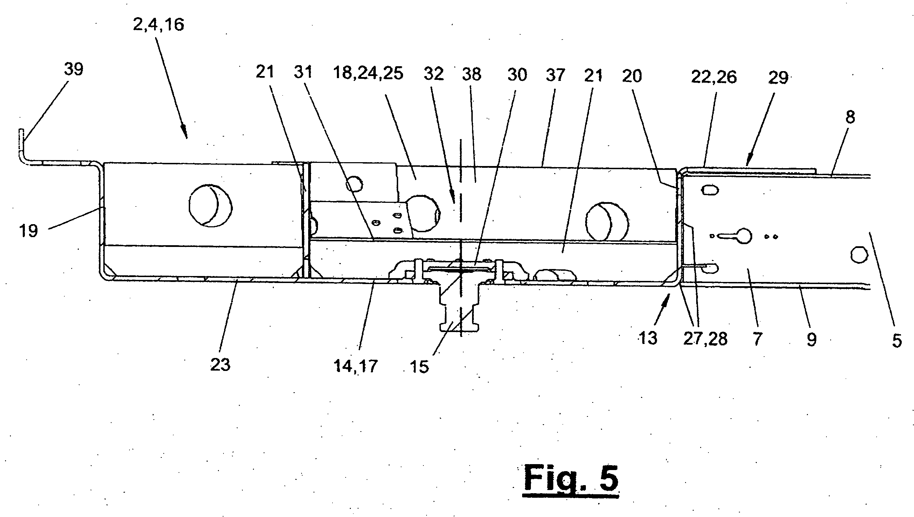

Der Königszapfen (15) oder eine andere Zugeinrichtung können am Boden (17) des Kopfteils (4) in beliebig geeigneter Weise angeordnet und befestigt sein. Hierfür kann z.B. ein in Figur 5 und 6 gezeigtes Einsatzteil (30) vorhanden und am Boden (17) befestigt sein. Der Königszapfen (15) ragt durch eine Bodenöffnung nach unten und weist an der Oberseite eine verbreiterte Stützplatte auf. Diese wird im Innenraum (32) von einer topfförmigen Scheibe übergriffen. Die Befestigung am Boden (17) kann z.B. mittels der in Figur 5 dargestellten Schrauben erfolgen. Alternativ kann der Königszapfen (15) in anderer Weise am Boden (17) bzw. an einer Sattelauflagenplatte (14) befestigt sein, z.B. durch Schweißen.

Die Lage der Zugverbindung (15), insbesondere des Königszapfens, kann mittig und in Axialrichtung festgelegt sein. Die Axiallage kann sich nach der Achsenzahl und der damit einhergehenden Lastverteilung richten. Die Lage kann fest vorgegeben sein, so dass entsprechend der Achszahl unterschiedliche modulare Kopfteile (4) eingesetzt werden. Alternativ kann die Zugverbindung (15), insbesondere der Königszapfen, axial verstellbar sein, wobei das Einsatzteil (30) z.B. mehrere vorgegebene Montagestellen am Boden (17) bzw. an der Sattelauflageplatte (14) haben kann. Hierfür können ggf. auch Adapter eingesetzt werden.

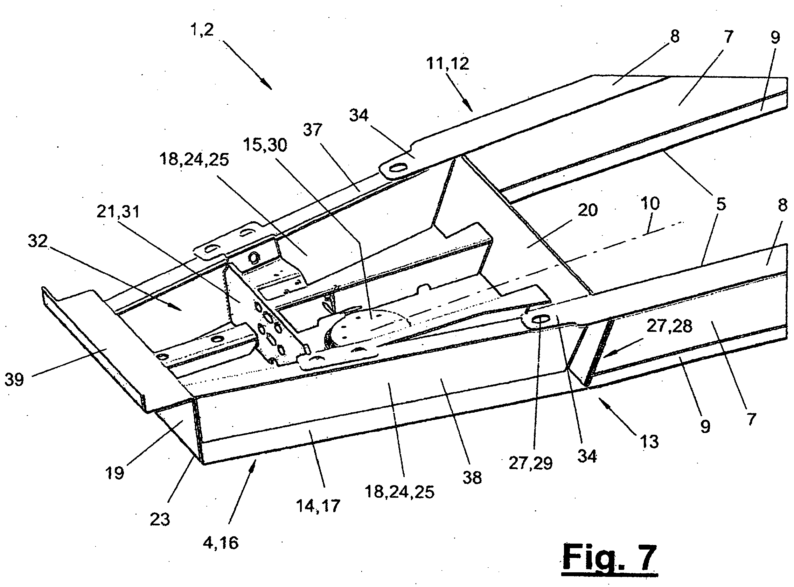

Figur 7 bis 9 zeigen eine zweite Variante des Kopfteils (4) und der Kastenkonstruktion (16). Sie unterscheidet sich vom ersten Ausführungsbeispiel durch die Form der Seitenwände (18) und ihrer Längsträger (24), die hier als stehende L-Profile mit einem oberen Quergurt (37) und einem aufrechten Steg (38) ausgebildet sind. Der Steg (38) steht auf dem Boden (17) auf und ist hier in geeigneter Weise befestigt, z.B. angeschweißt. Der Steg (38) ist jeweils vom Bodenrand zurück versetzt angeordnet, wobei der nach außen abgewinkelte Obergurt (37) bis zum Bodenrand reicht.

In diesem zweiten Ausführungsbeispiel weist die aufrechte oder schräge Rückwand (20) keine Abkantung am oberen Rand auf. Sie endet in Höhe des oberen Endes des Stegs (7) der Längsträger (5). Die Rückwand (20) stösst stumpf an die Stege (7) an und ist hier in geeigneter Weise durch eine Schweißverbindung (27), z.B. eine Stumpfnaht (28) befestigt.

In der zweiten Ausführungsform sind die Obergurte (8) der Längsträger (5) axial nach vorn verlängert und übergreifen die Stoss- oder Verbindungsstelle (13), wobei sie jeweils einen Verbindungsflansch (34) bilden. Der Verbindungsflansch (34) liegt auf dem jeweils zugeordneten Obergurt (37) der benachbarten Seitenwand (18) auf und ist hier mit einer geeigneten Verbindung (27), insbesondere einer Schweißverbindung, befestigt. Die Verbindungsflansche (34) können gelocht sein, wobei die Schweißverbindung (27) als Lochschweißung (29) ausgeführt sein kann.

Die Verbindungsflansche (34) übergreifen auch die bis zu den seitlichen Bodenrändern reichende Querwand (20) und können hier ebenfalls mit einer Verbindung (27), insbesondere einer Schweißnaht, befestigt sein. Die Verbindungsflansche (34) können eine Taillierung und eine gegenüber den Obergurten (8) verringerte sowie an die Quergurte (37) angepasste Breite aufweisen. Eine Schweißnaht, insbesondere Stumpfnaht (28), kann auch zwischen den Untergurten (9) und der Rückwand (20) vorhanden sein. Der Aufbau der Kastenkonstruktion (16) kann ansonsten der gleiche wie im ersten Ausführungsbeispiel sein.

In Abwandlung dieses Ausführungsbeispiels können die Untergurte (9) der Längsträger (5) zusätzlich oder alternativ Verbindungsflansche (34) der beschriebenen Art aufweisen. Ferner können Verbindungsflansche (34) an Untergurten (9) mit den Verbindungsflanschen (22) des ersten Ausführungsbeispiels kombiniert werden, um eine obere und untere Überlappverbindung zu bilden.

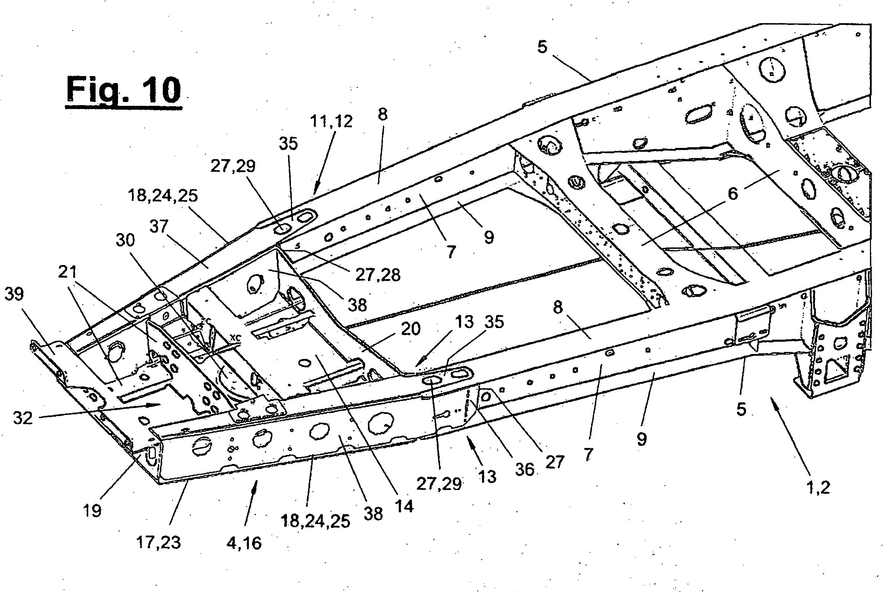

Figur 10 bis 13 zeigen eine dritte Variante des Kopfteils (4) und der Kastenkonstruktion (16). Die Seitenwände (18) und ihre Längsträger (24) sind hier wieder als U-Profile (25) ausgebildet und mit der Längsöffnung nach unten ausgerichtet. Hierbei sind die oberen Quergurte (37) nach hinten axial verlängert und bilden jeweils einen Verbindungsflansch (35), der die Stoss- und Verbindungsstelle (13) übergreift und auf dem benachbarten Obergurt (8) des zugehörigen Längsträgers (5) aufliegt und hier mit einer geeigneten Verbindung (27), insbesondere einer Schweißverbindung befestigt ist. Bei einer gelochten Flanschausführung kann dies wiederum eine Lochschweißung (29) sein. Die Verbindungsflansche (35) übergreifen dabei auch die Querwand (20).

Alternativ oder zusätzlich sind die jeweils äußeren aufrechten Stege (38) der Längsträger (24) bzw. der Profile (25) axial nach hinten verlängert und übergreifen ebenfalls die Stoss- oder Verbindungsstelle (13), wobei sie in den Freiraum zwischen den Quergurten (8,9) und dem Seitensteg (7) des anschließenden Längsträgers (5) ragen und einen weiteren Verbindungsflansch (36) bilden. Der Verbindungsflansch (36) umgreift seitlich auch den Rand der Rückwand (20). Er kann am Ende nach innen zum Steg (7) des Längsverbinders (5) abgewinkelt sein und hier mit seinem Stirnrand anliegen. Die Verbindungsflansche (36) können mittels einer geeigneten Verbindung (27), insbesondere einer Schweißverbindung, am Längsträger (5) befestigt sein. Sie können hierbei mit dem Steg (7) und/oder einem oder beiden Quergurten (8,9) verschweißt sein. Der jeweils innere aufrechte Steg (38) der Profile (25) hat eine kürzere axiale Länge und stösst an der Querwand (20) an.

Die Verbindungsflansche (36) des dritten Ausführungsbeispiels können auch ergänzend zu den Verbindungsflanschen (22) des ersten Ausführungsbeispiels von Figur 1 bis 6 eingesetzt werden. Ihr Einsatz ist auch beim zweiten Ausführungsbeispiel von Figur 7 bis 9 und den genannten Abwandlungen möglich, wobei hier z.B. das L-Profil umgedreht angeordnet wird, so dass der aufrechte Steg (38) am Bodenrand angeordnet ist und der Quersteg (37) zur Innenseite oder Mitte vorspringt.

In allen vorgenannten Ausführungsvarianten sind die Abmessungen der Kastenwände (18,20), insbesondere die Höhen, und die Abmessung der Längsträger (5) entsprechend aufeinander abgestimmt.

Abwandlungen der gezeigten und beschriebenen Ausführungsformen sind in verschiedener Weise.möglich. Die Formgebung und die Abmessungen des Chassis (2) können sich an unterschiedliche Aufbauten, Fahrwerke bzw. Achszahlen, zulässige Gesamtgewichte oder dergleichen, anpassen. Die Längsträger (5) des Rumpfteils (3) können ggf. eine andere Profilform haben, z.B. als Z-Profile, hohle Kastenprofile oder dergleichen. Statt Schweißverbindungen können andere geeignete Verbindungsarten eingesetzt werden.

In der gezeigten Ausführungsform ist der Anhänger (1) als Sattelauflieger mit einer Scheuerplatte (14) und einem Königszapfen (15) ausgebildet. Alternativ kann der Anhänger (1) unter dem Kopfteil (4) einen Drehschemel mit einer Achsanordnung und eine Deichsel, z.B. eine Schwenkdeichsel, aufweisen. Der Boden (17) bzw. die Platte (14) sind dementsprechend als Sitz- und Lagerelement eines Drehschemels ausgebildet. Die Zugverbindung (15) wird in dieser Ausführungsform von der besagten Deichsel gebildet. In weiterer Abwandlung kann der Anhänger (1) als Zentralachsenanhänger ausgebildet sein, bei dem das Kopfteil (14) mit seinem Boden (17) z.B. auf einer starren Deichsel bzw. einem Deichselholm aufliegt oder anderweitig abgestützt ist.

Ferner ist es möglich, einen Aufbau, z.B. einen Koffer, eine Plattform, eine Pritsche oder dgl. fest auf dem Chassis (2) anzuordnen. Das Chassis (2) kann außerdem in der Draufsicht eine im wesentlichen rechteckige Form ohne Verjüngung aufweisen. In der gezeigten und bevorzugten Ausführungsform fluchten das Kopfteil (4) und das vordere Ende des Rumpfteils (3) in der Höhe und Breite. In Abwandlung der gezeigten Ausführungsform kann ein Versatz, insbesondere ein Höhenversatz, zwischen Kopfteil (4) und Rumpfteil (3) vorhanden sein. Ferner kann das Rumpfteil (3) mehrteilig ausgeführt sein, wobei das Chassis (2) auch drei oder mehr Module aufweisen kann.

Im Rahmen der Anmeldung werden auch folgende Ausführungsbeispiele offenbart:
1.) Chassis für Anhänger (1), insbesondere für Sattelauflieger, wobei das Chassis (2) Längsträger (5) und frontseitig ein mit den Längsträgern (5) verbundenes vorderes Kopfteil (4) mit einer Platte (14) und einer Zugverbindung (15), insbesondere einer Sattelauflageplatte mit einem Königszapfen, aufweist, wobei
   das Kopfteil (4) eine wannenartige vertiefte Kastenkonstruktion (16) mit einem die Zugverbindung (15) aufnehmenden Boden (17) und seitlich umlaufenden Kastenwänden (18,19,20) aufweist, wobei die quer liegende Rückwand (20) der Kastenkonstruktion (16) an einer Verbindungsstelle (13) im stumpfen Stoss an den Längsträgern (5) anliegt und die Kastenkonstruktion (16) mit einer Verbindung (27), insbesondere einer Schweißverbindung, an den Längsträgern (5) befestigt ist. Die Formgebung des wannenförmigen Kopfteils ist für eine hohe Form- und Verbindungsfestigkeit vorteilhaft.
2.) Chassis nach Ausführungsbeispiel 1,
   wobei das Kopfteil (4)
   ein seitlich offenes gewölbtes oder gebogenes Wannenblech (23) aufweist, das den Boden (17) und die Vorder- und Rückwände (19,20) bildet.
3.) Chassis nach Ausführungsbeispiel 1 oder 2, dadurch **gekennzeichnet**, dass im Kopfteil (4), insbesondere im Wannenblech (23), profilierte Längsträger (24) befestigt sind, welche die Seitenwände (18) des Kopfteils (4) bilden.
4.) Chassis nach einem der vorhergehenden Ausführungsbeispiele, wobei die profilierten Längsträger (24) als U- oder L- Profile mit einem oberen Quergurt (37) und einem aufrechten Steg (38) ausgebildet sind.
5.) Chassis nach einem der vorhergehenden Ausführungsbeispiele, dadurch **gekennzeichnet**, dass die Kastenkonstruktion (16) und die Längsträger (5) mittels einem die Verbindungsstelle (13) übergreifenden Verbindungsflansch (22,34,35) miteinander verbunden (27), insbesondere verschweißt, sind.
6.) Chassis nach einem der vorhergehenden Ausführungsbeispiele, dadurch **gekennzeichnet**, dass die Rückwand (20) abgewinkelt ist und einen axial abstehenden Verbindungsflansch (22) aufweist, der auf einem Quergurt (8,9), insbesondere dem Obergurt, eines Längsträgers (5), anliegend befestigt, insbesondere verschweißt ist.
7.) Chassis nach einem der vorhergehenden Ausführungsbeispiele, dadurch **gekennzeichnet**, dass ein verlängerter Quergurt (8,9), insbesondere ein Obergurt, eines Längsträgers (5) einen die Verbindungsstelle (13) übergreifenden Verbindungsflansch (34) bildet und an einer Seitenwand (18) der Kastenkonstruktion (16), insbesondere an deren Obergurt (37), anliegend mit dieser verbunden, insbesondere verschweißt ist.
8.) Chassis nach einem der vorhergehenden Ausführungsbeispiele, dadurch **gekennzeichnet**, dass eine Seitenwand (18) der Kastenkonstruktion (16) verlängert ist und einen die Verbindungsstelle (13) übergreifenden Verbindungsflansch (35,36) bildet, der an einem Längsträger (5) anliegend befestigt, insbesondere verschweißt ist.
9.) Chassis nach Ausführungsbeispiel 8, dadurch **gekennzeichnet**, dass ein Obergurt (37) der Seitenwand (18) verlängert ist und einen die Verbindungsstelle (13) übergreifenden Verbindungsflansch (35) bildet, der am Obergurt (8) eines Längsträgers (5) anliegend befestigt, insbesondere verschweißt ist.
10.) Chassis nach Ausführungsbeispiel 8 oder 9, dadurch **gekennzeichnet**, dass ein aufrechter Steg (38) der Seitenwand (18) verlängert ist und einen die Verbindungsstelle (13) übergreifenden Verbindungsflansch (36) bildet, der am Steg (7) eines Längsträgers (5) anliegend befestigt, insbesondere verschweißt ist.
11.) Chassis nach einem der vorhergehenden Ausführungsbeispiele, dadurch **gekennzeichnet**, dass die Schweißverbindung (27) eines gelochten Verbindungsflanschs (22,34,35) als Lochschweißung (29) ausgebildet ist.
12.) Chassis nach einem der vorhergehenden Ausführungsbeispiele, dadurch **gekennzeichnet**, dass die Schweißverbindungen (27) an den Stoßstellen zwischen der Rückwand (20) und der Frontseite der Längsträger (5) als Stumpfnaht (28) ausgebildet sind.
13.) Chassis nach einem der vorhergehenden Ausführungsbeispiele, dadurch **gekennzeichnet**, dass das Chassis (2) am vorderen Ende (11) eine seitliche konische Verjüngung (12) und das Kopfteil (4) in der Draufsicht eine Trapezform aufweist.
14.) Chassis nach einem der vorhergehenden Ausführungsbeispiele, dadurch **gekennzeichnet**, dass die Kastenkonstruktion (16) im Innenraum (32) eine oder mehrere längs und/oder quer Einbauwände (21) aufweist.
15.) Chassis nach einem der vorhergehenden Ausführungsbeispiele, dadurch **gekennzeichnet**, dass das Kopfteil (4) nach oben offen ist und eine oder mehrere Aufnahmen (31) für Aufbaukomponenten, insbesondere für eine Hubeinrichtung, aufweist.
16.) Chassis nach einem der vorhergehenden Ausführungsbeispiele, dadurch **gekennzeichnet**, dass der Boden (17) eine Sattelauflageplatte (14) bildet und einen Zapfeneinsatz (30) aufweist.
17.) Chassis nach einem der vorhergehenden Ausführungsbeispiele, dadurch **gekennzeichnet**, dass in den Seitenwänden (18) und in der Rückwand (20) des Kopfteils Öffnungen und Freiräume zur Aufnahme von Versorgungseinrichtungen, insbesondere Leitungen, angeordnet sind.
18.) Chassis nach einem der vorhergehenden Ausführungsbeispiele, dadurch **gekennzeichnet**, **dass** das Chassis (2) mehrteilig ausgebildet ist und ein hinteres Rumpfteil (3) mit den Längsträgern (5) und einem oder mehreren Querträgern (6) aufweist.
19.) Chassis nach einem der vorhergehenden Ausführungsbeispiele, dadurch **gekennzeichnet**, dass das Chassis (2) ein Fahrwerk mit einer oder mehreren Achsen und einen Aufbau oder Aufnahmen für einen Wechselaufbau trägt.
20.) Chassis nach einem der vorhergehenden Ausführungsbeispiele, dadurch **gekennzeichnet**, dass der Aufbau als Kippaufbau, insbesondere als Kippmulde, ausgebildet ist und das Chassis (2) am rückwärtigen Ende eine Kippachse (33) aufweist.
21.) Anhänger, insbesondere Sattelauflieger, mit einem Chassis (2), das Längsträger (5) und frontseitig eine Platte (14) mit einer Zugverbindung (15), insbesondere eine Sattelauflageplatte mit einem Königszapfen, aufweist, dadurch **gekennzeichnet**, dass das Chassis (2) nach mindestens einem der Ansprüche 1 bis 20 ausgebildet ist.
22.) Anhänger nach Ausführungsbeispiel 21, dadurch **gekennzeichnet**, dass der Anhänger, (1) ein Fahrwerk mit einer oder mehreren Achsen und einem Aufbau aufweist.
23.) Anhänger nach Ausführungsbeispiel 21 oder 22, dadurch **gekennzeichnet**, dass der Anhänger (1) einen Kippaufbau, sowie einen Kipp- oder Hubantrieb aufweist.
24.) Anhänger nach einem der Ausführungsbeispiele 21 bis 23, dadurch **gekennzeichnet**, dass der Anhänger (1) als Sattelauflieger mit einem Kippbehälter, insbesondere Kippmulde, Kipppritsche oder Kippsilo, ausgebildet ist.
25.) Anhänger nach Ausführungsbeispiel 21 oder 22, dadurch **gekennzeichnet**, dass der Anhänger (1) einen Wechselaufbau oder Aufnahmen für wechselbare Behälter, insbesondere Container, aufweist.

### BEZUGSZEICHENLISTE

- 1: Anhänger, Sattelauflieger
- 2: Chassis, Anhängerchassis
- 3: Chassisteil, Rumpfteil
- 4: Chassisteil, Kopfteil
- 5: Längsträger
- 6: Querträger
- 7: Steg
- 8: Obergurt
- 9: Untergurt
- 10: Längsachse
- 11: vorderes Ende
- 12: Verjüngung
- 13: Verbindungsstelle
- 14: Scheuerplatte
- 15: Zugverbindung, Königszapfen
- 16: Kastenkonstruktion
- 17: Boden
- 18: Kastenwand, Seitenwand
- 19: Kastenwand, Stirnwand, Frontwand
- 20: Kastenwand, Stirnwand, Rückwand
- 21: Einbauwand
- 22: Verbindungsflansch
- 23: Wannenblech
- 24: Längsträger
- 25.: Profil, U-Profil
- 26: Winkel, Flanschwinkeln
- 27: Verbindung, Schweißverbindung
- 28: Stumpfnaht, Schweißstoß
- 29: Lochschweißung
- 30: Zapfeneinsatz
- 31: Aufnahme für Aufbaukomponente
- 32: Innenraum
- 33: Kippachse
- 34: Verbindungsflansch
- 35: Verbindungsflansch
- 36: Verbindungsflansch
- 37: oberer Quergurt, obergurt Seitenwand
- 38: aufrechter Steg Seitenwand
- 39: Abwinklung

## Patentansprüche

1. Chassis für Anhänger (1), insbesondere für Sattelauflieger, wobei das Chassis (2) Längsträger (5) und frontseitig eine Platte (14) mit einer Zugverbindung (15), insbesondere eine Sattelauflageplatte mit einem Königszapfen, aufweist, wobei das Chassis (2) mehrteilig ausgebildet ist und ein hinteres Rumpfteil (3) mit den Längsträgern (5) sowie ein vorderes Kopfteil (4) mit der Platte (14) und der Zugverbindung (15) aufweist, wobei das Kopfteil (4) als Kastenkonstruktion (16) ausgebildet und an der Frontseite des Rumpfteils (3) angesetzt und befestigt ist,
**dadurch gekennzeichnet, dass**
das Kopfteil (4) eine wannenartige vertiefte Kastenkonstruktion (16) mit einem die Zugverbindung (15) aufnehmenden Boden (17) und seitlich umlaufenden Kastenwänden (18, 19, 20) aufweist

2. Chassis nach Anspruch 1,
**dadurch gekennzeichnet, dass**
das Kopfteil (4) mit seiner querliegenden Rückwand (20) im stumpfen Stoss an Längsträgern (5) des Rumpfteils (3) anliegt und befestigt, insbesondere verschweißt ist.

3. Chassis nach Anspruch 1 oder 2,
**dadurch gekennzeichnet, dass**
das Chassis (2) am vorderen Ende (11) eine seitliche konische Verjüngung (12) aufweist.

4. Chassis nach einem der vorhergehenden Ansprüche,
**dadurch gekennzeichnet, dass**
das Kopfteil (4) in der Draufsicht eine Trapezform aufweist.

5. Chassis nach einem der vorhergehenden Ansprüche,
**dadurch gekennzeichnet, dass**
die Rückwand (20) abgewinkelt ist und einen axial abstehenden Verbindungsflansch (22) aufweist, der auf einem Quergurt (8,9), insbesondere dem Obergurt, der Längsträger (5) anliegend befestigt, insbesondere verschweißt ist.

6. Chassis nach einem der vorhergehenden Ansprüche,
**dadurch gekennzeichnet, dass**
der Verbindungsflansch (22) von zwei randseitigen, dreiecksförmigen Flanschwinkeln (26) gebildet ist.

7. Chassis nach einem der vorhergehenden Ansprüche,
**dadurch gekennzeichnet, dass**
die Schweißverbindungen an den Stoßstellen zwischen der Rückwand (20) und der Frontseite der Längsträger (5) als Stumpfnaht (28) ausgebildet sind und/oder die Schweißverbindung zwischen einem gelochten Verbindungsflansch (22) und dem Quergurt (8, 9) als Lochschweißung (29) ausgebildet ist.

8. Chassis nach einem der vorhergehenden Ansprüche,
**dadurch gekennzeichnet, dass**
das Kopfteil (4) nach oben offen ist und eine oder mehrere Aufnahmen (31) für Aufbaukomponenten, insbesondere für eine Hubeinrichtung, aufweist.

9. Chassis nach einem der vorhergehenden Ansprüche,
**dadurch gekennzeichnet, dass**
das Kopfteil (4) ein seitlich offenes gewölbtes oder gebogenes Wannenblech (23) aufweist, das den Boden (17) und die Vorder- und Rückwände (19, 20) bildet, insbesondere wobei im Wannenblech (23) profilierte Längsträger (24) befestigt sind, welche die Seitenwände (18) des Kopfteils (4) bilden, insbesondere wobei die profilierten Längsträger (24) als U-Profile ausgebildet sind, die mit ihrer Längsöffnung zum Boden gerichtet am Wannenblech (23) befestigt, insbesondere verschweißt sind.

10. Chassis nach einem der vorhergehenden Ansprüche,
**dadurch gekennzeichnet, dass**
der Boden (17) eine Sattelauflageplatte (14) bildet und einen Zapfeneinsatz (30) aufweist.

11. Chassis nach einem der vorhergehenden Ansprüche,
**dadurch gekennzeichnet, dass**
in den Seitenwänden (18) und in der Rückwand (20) des Kopfteils Öffnungen und Freiräume zur Aufnahme von Versorgungseinrichtungen, insbesondere Leitungen, angeordnet sind.

12. Chassis nach einem der vorhergehenden Ansprüche,
**dadurch gekennzeichnet, dass**
das Chassis (2) ein Fahrwerk mit einer oder mehreren Achsen und einen Aufbau oder Aufnahmen für einen Wechselaufbau trägt, insbesondere wobei der Aufbau als Kippaufbau, insbesondere als Kippmulde, ausgebildet ist und das Chassis (2) am rückwärtigen Ende eine Kippachse (33) aufweist.

13. Anhänger, insbesondere Sattelauflieger, mit einem Chassis (2) nach mindestens einem der Ansprüche 1 bis 12.

14. Anhänger nach Anspruch 13,
**dadurch gekennzeichnet, dass**
der Anhänger (1) ein Fahrwerk mit einer oder mehreren Achsen und einem Aufbau und/oder einen Kippaufbau, sowie einen Kipp- oder Hubantrieb aufweist.

15. Anhänger nach Anspruch 13 oder 14,
**dadurch gekennzeichnet, dass**
der Anhänger (1) als Sattelauflieger mit einem Kippbehälter, insbesondere Kippmulde, Kipppritsche oder Kippsilo, ausgebildet ist und/oder einen Wechselaufbau oder Aufnahmen für wechselbare Behälter, insbesondere Container, aufweist.

## Claims

1. Chassis for trailers (1), particularly for semitrailers, wherein the chassis (2) includes side members (5) and at the front has a plate (14) with a tractive connector (15), particularly a trailer hitch plate with a kingpin, wherein the chassis (2) is of multipart construction and has a rear body part (3) which includes the side members (5) and a front head part (4) which includes the plate (14) and the tractive connector (15), wherein the head part (4) is a box structure (16) and is mounted on and fastened to the front side of the body part (3), **characterised in that** the head part (4) has a trough-like, recessed box construction (16) with a bottom (17) which accommodates the tractive connector (15) and which has box walls (18, 19, 20) extending round the periphery thereof.

2. Chassis according to claim 1, **characterised in that** the transverse rear wall (20) of head part (4) bears on and is fastened to side members (5) of the body part (3), particularly by welding, in a butt joint arrangement.

3. Chassis according to claim 1 or 2, **characterised in that** the chassis (2) has a lateral conical taper (12) at the front end (11) thereof.

4. Chassis according to any one of the preceding claims, **characterised in that** the head part (4) has a trapezoidal shape in plan view.

5. Chassis according to any one of the preceding claims, **characterised in that** the rear wall (20) is arranged at an angle and has an axially projecting connecting flange (22) which is fastened, particularly welded, flush to a transverse brace (8, 9), particularly the upper brace of the side members (5).

6. Chassis according to any one of the preceding claims, **characterised in that** the connecting flange (22) is formed by two triangular flange brackets (26) arranged on the sides.

7. Chassis according to any one of the preceding claims, **characterised in that** the welded joints are created as butt welds (28) at the butt joints between the rear wall (20) and the front side of the side members (5), and/or the welded joint is realised as a hole weld (29) between a perforated connecting flange (22) and the transverse brace (8, 9).

8. Chassis according to any one of the preceding claims, **characterised in that** the head part (4) is upwardly open and has one or more accommodation points (31) for mounted components, particularly for a lifting device.

9. Chassis according to any one of the preceding claims, **characterised in that** the head part (4) has a laterally open arched or curved trough panel (23) which forms the floor (17) and the front and rear walls (19, 20) of the head part, wherein in particular profiled side members (24) are fastened in the trough panel (23) and form the side walls (18) of the head part (4), wherein in particular the profiled side members (24) are realised as U-profiles which are with their longitudinal opening facing towards the floor (17) fastened, particularly welded, to the trough panel (23).

10. Chassis according to any one of the preceding claims, **characterised in that** the bottom (17) forms a trailer hitch plate (14) and has a pin insert (30).

11. Chassis according to any one of the preceding claims, **characterised in that** openings and spaces are provided in the side walls (18) and in the rear wall (20) of the head part to accommodate supply installations, particularly lines.

12. Chassis according to any one of the preceding claims, **characterised in that** the chassis (2) supports an undercarriage having one or more axles and an attachment or mountings for a replaceable superstructure, wherein particularly the superstructure is designed as a tipping attachment, particularly a dumper bucket, and the chassis (2) has a tipping axle (33) at the rear end thereof.

13. Trailer, particularly a semitrailer, with a chassis (2) according to at least one of the claims 1 to 12.

14. Trailer according to claim 13, **characterised in that** the trailer (1) has an undercarriage with one or more axles and a superstructure and/or a tipping attachment, and a drive unit for tipping or lifting.

15. Trailer according to claim 13 or 14 **characterised in that** the trailer (1) is constructed as a semitrailer with a tipping container, particularly a dumper bucket, a tipping bed or tipping silo, and/or has a replaceable superstructure or mountings for replaceable storage elements, particularly containers.

## Revendications

1. Châssis pour remorque (1), notamment pour une semi-remorque, le châssis (2) comportant des longerons (5) et sur la face frontale une plaque (14) avec un assemblage de traction (15), notamment une plaque d'appui de sellette avec une couronne d'orientation,
le châssis (2) étant conçu en plusieurs parties et comportant une partie de corps (3) arrière avec les longerons (5), ainsi qu'une partie de tête (4) avant avec la plaque (14) et l'assemblage de traction (15), la partie de tête (4) étant conçue en tant que structure en caisson (16) et étant aboutée et fixée sur la face frontale de la partie de corps (3), **caractérisé en ce que** la partie de tête (4) comporte une structure (16) creusée en forme de cuve avec un fond inférieur (17) recevant l'assemblage de traction (15) et des parois de caisson (18, 19, 20) latéralement périphériques.

2. Châssis selon la revendication 1,
**caractérisé en ce que**
par sa paroi arrière (20) transversale, la partie de tête (4) s'appuie en joint abouté et est fixée, notamment soudée sur des longerons (5) de la partie de corps (3).

3. Châssis selon la revendication 1 ou la revendication 2,
**caractérisé en ce que**
sur l'extrémité (11) avant, le châssis (2) comporte un rétrécissement (12) conique latéral.

4. Châssis selon l'une quelconque des revendications précédentes,
**caractérisé en ce que**
vue en élévation, la partie de tête (4) présente la forme d'un trapèze.

5. Châssis selon l'une quelconque des revendications précédentes,
**caractérisé en ce que**
la paroi arrière (20) est coudée et comporte une bride d'assemblage (22) débordant en direction axiale qui est fixée en étant adjacente, notamment soudée sur une traverse (8, 9), notamment sur la traverse supérieure des longerons (5).

6. Châssis selon l'une quelconque des revendications précédentes,
**caractérisé en ce que**
la bride d'assemblage (22) est formée par deux équerres à bride (26) en bordure, de forme triangulaire.

7. Châssis selon l'une quelconque des revendications précédentes, **caractérisé en ce que**
les soudures sont conçues en tant que joints de soudure (28) bord à bord sur les zones de jointure entre la paroi arrière (20) et la face frontale des longerons (5) et/ou la soudure est conçue en tant que soudure en bouchon (29) entre une bride d'assemblage (22) perforée et la traverse (8, 9).

8. Châssis selon l'une quelconque des revendications précédentes,
**caractérisé en ce que**
la partie de tête (4) est ouverte vers le haut et comporte un ou plusieurs logements (31) pour des composants de superstructure, notamment pour un système de levage.

9. Châssis selon l'une quelconque des revendications précédentes,
**caractérisé en ce que**
la partie de tête (4) comporte une tôle à cuve (23) voûtée ou incurvée, latéralement ouverte qui forme le fond inférieur (17) et les parois avant et arrière (19, 20), notamment dans la tôle à cuve (23) étant fixés des longerons (24) profilés, lesquels forment les parois latérales (18) de la partie de tête (4), notamment les longerons (24) profilés étant conçus en tant que profilés en U, qui avec leur ouverture longitudinale orientée vers le fond inférieur (17) sont fixés, notamment soudés sur la tôle à cuve (23).

10. Châssis selon l'une quelconque des revendications précédentes,
**caractérisé en ce que**
le fond inférieur (17) forme une plaque d'appui (14) de sellette et comporte un insert à tenon (30).

11. Châssis selon l'une quelconque des revendications précédentes,
**caractérisé en ce que**
dans les parois latérales (18) et dans la paroi arrière (20) de la partie de tête sont placés des ouvertures et des espaces libres destinés à recevoir des dispositifs d'alimentation, notamment des conduits.

12. Châssis selon l'une quelconque des revendications précédentes,
**caractérisé en ce que**
le châssis (2) porte un train de roulement avec un ou plusieurs essieux et une structure ou des logements pour une structure interchangeable, notamment la structure étant conçue en tant que structure basculante, notamment en tant que benne basculante et sur l'extrémité arrière, le châssis (2) comportant un axe de basculement (33).

13. Remorque, notamment semi-remorque avec un châssis (2) selon au moins l'une quelconque des revendications 1 à 12.

14. Remorque selon la revendication 13,
**caractérisée en ce que**
la remorque (1) comporte un train de roulement avec un ou plusieurs essieux et une structure et/ou une structure basculante, ainsi qu'un entraînement en basculement ou en levée.

15. Remorque selon la revendication 13 ou la revendication 14,
**caractérisée en ce que**
la remorque (1) est conçue en tant que semi-remorque avec un contenant basculant, notamment une benne basculante, un basculeur ou une citerne basculante et/ou une structure interchangeable ou des logements pour des contenants interchangeables, notamment des conteneurs.
